# EUROPEAN PATENT SPECIFICATION

(11) **EP 0 453 471 B1**
(45) Date of publication and mention of the grant of the patent: **28.04.1993**
(21) Application number: 90901764.2
(22) Date of filing: 16.01.1990
(51) Int. Cl.: A63G 13/00

(54) **A SPRING DEVICE, IN PARTICULAR FOR COIL SPRING SUPPORTED PLAYGROUND APPLIANCES**
FEDERANORDNUNG, INSBESONDERE FÜR MITTELS SCHRAUBENFEDERN GESTÜTZTE SPIELPLATZGERÄTE
DISPOSITIF A RESSORT, EN PARTICULIER POUR EQUIPEMENTS DE TERRAIN DE JEU MONTES SUR RESSORTS A BOUDIN

(30) Priority: 16.01.1989 DK 176/89
(43) Date of publication of application: 30.10.1991
(73) Proprietor: VEKSOE-TAULOV A/S, DK-7000 Fredericia (DK)
(72) Inventor: LINDHARDT, Poul, Erik, DK-6000 Kolding (DK)
(74) Representative: Gregersen, Niels Henrik
(86) International application number: DK9000013
(87) International publication number: WO9007962

(56) References cited:
- EP-A- 0 190 807
- DE-C- 3 341 432
- DK-B- 0 137 627
- DK-B- 0 152 968
- US-A- 2 832 594
- US-A- 2 996 298
- Bussien-Automobil technisches Handbuch-Ergänzungsband zur 18.Auflage-1978-pages 558,566

## Description

The present invention relates to a spring device for coil spring supported playground appliances, of the kind specified in the introductory part of claim 1.

Coil spring supported playground appliances have been getting rather popular and are found in many playgrounds, in particular in connection with public institutions. Where playgrounds for smaller children are concerned it has been found, however, that some of the possible movements of coil spring supported playground appliances are often too violent. Smaller children have difficulty in coordinating their hold of and on the playground appliance in particular during violent sideways movements while even rather violent backward and forward movements do not create such problems.

US-A-2 996 298 discribes a movable child's rocking device comprising a spring device with a solid coil spring being interconnected between a hobby horse and a base plate member. The horse is connected to a coupling plate in which an upper end of an actuating rod is guided in such a manner that said upper end may be longitudinally displaced in the coupling plate while the lower end of the actuating rod engage between two upwardly extending base plate flanges of a circular base plate in such a manner that the actuating rod may pivot about a vertical axis which is supported on compression springs each lodged within the base plate flanges - and simultaneously a lowermost end of the actuating rod underneath the circular base plate and the base plate member engage with an elongate slot at one end of a creeper arm which at the opposite end being provided with a clutch pad which is biased against the support surface by a leaf spring.

In other word US-A-2 996 298 describes a movable hobby horse by which the forward and backward swinging movements of the supporting coil spring by means of said actuating rod system may be utilized to move the hobby horse on the support surface - however this known child's rocking device do not prevent sideways movements of hobby horse.

The purpose of the invention is to provide a spring device of the kind mentioned initially, and by means of which the problems mentioned are obviated in a simple way.

The spring device according to the invention is distinctive in that the said means for limiting the movements of the coil spring comprise at least one connection member whose opposite ends are connected - within the hollow of the coil springto fitting parts to which opposite end parts of the coil spring are connected, the said connection member being predominantly bend resistant at right angles to the axis of the coil spring along a mainly vertical transverse plane of the spring device. By these means a possibility of preventing sideways swinging movements of the coil spring is attained in a simple way, provided, of course, that the spring device as a whole is mounted correctly, that is, such that the bend resistance of the said connection member acts in transverse to the forward-backward movements of the playground appliance.

By having the movement-limiting connection member positioned inside the coil spring it is also attained that the very popular overall impression of the playground appliance being coil spring supported can be maintained. The spring device according to the invention interferes with the coil spring's springing movement in the upward and downward direction only to a lesser degree.

Expediently the spring device according to the invention is arranged such that the said connection member comprises telescopically interconnected link parts which are hinged to the said fitting parts, the axes of the hinges running in transverse to the backward and forward direction of move ment of the ploayground appliance.

In a particularly simple way the spring device according to the invention can be arranged such that the said connection member comprises mutually nonrotatable and telescopically interconnected link parts which are hinged to the said fitting parts.

Alternatively the spring device according to the invention can be arranged such that the said connection member comprises one or more thin leaf springs which are hinged to the said fitting parts at opposite ends.

As a further alternative the spring device according to the invention can be arranged such that the said connection member comprises a number of transverse flat iron bars which are welded to the said fitting parts and which are interconnected by hinges.

In the following the invention will be more closely explained with reference to the drawing, wherein:-
Fig. 1 is a side view of an embodiment of a spring device according to the invention,
Fig. 2 is a side view - part sectional of the spring device shown in Fig. 1 - where the coil spring itself has been removed,
Fig. 3 is a side view corresponding to Fig. 2, but turned 90°,
Fig. 4 is a corresponding side view of another embodiment of a spring device according to the invention, and
Fig. 5 is a corresponding side view of still another embodiment of a spring device according to the invention.

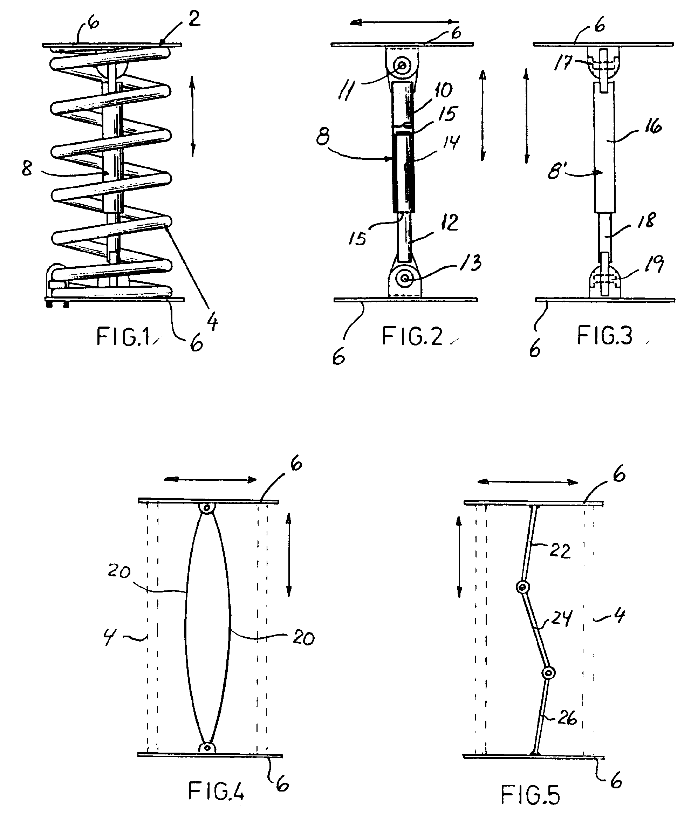

The spring device of Fig. 1 as a whole is designated 2, and it consists of a sturdy coil spring 4 which is adapted to be mounted between to fitting plates 6 which have a plane extension a little larger than the outer diameter of the coil spring 4. The fitting plates 6 which can be rectangular or circular, are intended to be mounted, respectively, to a lower anchoring point, for example a ground mount; and to a playground appliance, for example a so-called swinging-pet, a swing-plate or the like. Additionally, extending between the fitting plates 6 a connection member 8 is provided, consisting in Fig. 1 and 2 of a circular tube-shaped upper part 10 and a lower solid guiding rod 12 which is provided with a bearing sleeve 14, and which fits into the tube part 10, that is to say that the connection member 8 serves as a telescopic, sideways bend-resistant articulated connection between the fitting plates 6, as the tube part 10 and the guiding rod 12 are hinged to the fitting plates 6 at 11 and 13, respectively, in such a way that the connection member 8 is interposed so as to be pivotable around mutually transverse axes of the hinge connections 11 and 13 with the fitting plates 6. The bearing sleeve 14 is mounted on the guiding rod 12 by means of two spring washers 15.

In other words the coil spring 4 is only allowed free movement in the upward and downward direction as well as in the forward and backward direction of the playground appliance, that is at right angles to the paper plane in Fig. 1 and in the paper plane in Fig. 2, while the movement of the spring coil in the transverse direction, that is in the paper plane in Fig. 1 and at right angles to the paper plane in Fig. 2, is largely impeded by the transversely stiff connection member. The latter is preferably arranged as shown - along the longitudinal axis of the coil spring that is, inside the spring device 2 such that the very popular overall impression of a coil spring supported playground appliance can be maintained.

As shown in Fig. 3 the connection member 8' can also be of telescopic construction by means of an upper tubular sleeve 16 of rectangular tubing and a lower guiding rod 18 likewise of rectangular cross-section, the tubular sleeve 16 at 17 being hinged to the upper fitting plate 6 and the guiding rod 18 at 19 being hinged to the lower fitting plate 6, that is, with mutually parallel axes of rotation, such that the connection member 8' only allows the encasing coil spring 4 to move upward and downward in the paper plane and at right angles to the paper plane, that is, in the forward and backward direction of the playground appliance.

In Fig. 4 a telescopic connection member between the fitting plates 6 has been substituted by two thin leaf springs 20 which are pivotably connected at their opposite ends to the fitting plates 6 with mutually parallel transverse axes of rotation, which means that the leaf springs allow a pattern of movement for encasing coil springs corresponding to the situation of Fig. 2.

Or the connection member between the fitting plates 6 can as shown in Fig. 5 - be substituted by transverse, relatively wide flat iron bars 22, 26 (shown from the narrow side), of which an uppermost iron bar 22 is welded to the upper fitting plate 6 in the inclined position shown and a lowermost iron bar 26 is welded to the lower fitting plate 6 in the inclined position shown while an intermediate iron bar 24 is hinged at opposite ends to the other iron bars 22 and 26. This means that this alternative connection member allows a pattern of movement for the encasing coil spring 4 corresponding to the situation shown in Fig. 2.

The freedom of movement of the coil spring 4 in the upward and downward direction may possiblY be improved further in the embodiment of the connection member as shown in Fig. 5 by substituting the welds between the fitting plates 6 and the flat iron bars 22 and 26 by transverse hinges, such that the axes of rotation between all three flat iron bars 22, 24, 26 are mutually parallel, as thereby the encasing coil spring 4 is allowed also to expand in relation to the neutral position as shown (Fig. 1), which means that the distance between the fitting plates 6 is allowed to increase.

Consequently, the spring device according to the invention has the primary purpose of impeding sideways swinging motions of a coil spring supported playground appliance without the pattern of movement of the playground appliance in the upward and downward direction as well as in the back ward and forward direction being affected too much, although it is to be expected that the presence of one or more connection members between the fitting plates for the coil spring cannot entirely avoid affecting the desired movements of the playground appliance also.

Preferably the invention is realized with movement-impeding connection members which are arranged inside the hollow of the coil spring; but of course it will also be possible to work with external connection members or movement damping organs which are physically positioned outside the coil spring - even at some distance from it such that one cannot get fingers, toes or other parts of the body caught between the coil spring and the outside movement damping organs.

For the sake of completeness a number of alternative proposals for movement-impeding connection members which can be positioned inside the coils spring should be mentioned in closing. A strip of thin spring steel which is relatively wide across can be rigidly connected at opposite ends to both fitting plates 6, as end parts of the spring steel strip can be riveted to an angled iron fitting which can be welded to the fitting plates 6, the latter mutually parallel, transverse to the main direction of the playground appliance. Or the spring steel strip can be rigidly connected at one end to one of the fitting plates 6 while the opposite end of the spring steel strip can be rotatably connected to the other fitting plate 6 in such a way that the axis of rotation and the mounting axis, respectively, are still mutually parallel in the transverse direction.

Finally the spring device according to the invention may comprise a plurality of inside connection members, for example two connection members, which are placed opposite each other in the transverse direction and at a short distance from the inside of the coil spring 4.

## Claims

1. A spring device (2) for coil spring supported playground appliances, comprising a solid coil spring (4) which at one end being anchored to the ground or to a heavy base and which at the opposite end being connected to a playground appliance, and means arranged to limit the movements of the coil spring, **characterized** in that the said means for limiting the movements of the coil spring (4) comprise at least one connection member (8) whose opposite ends are connected within the hollow of the coil spring (4) - to fitting parts (6) to which opposite end parts of the coil spring are connected, the said connection member (8) being predominantly bend resistant at right angles to the axis of the coil spring (4) along a mainly vertical transverse plane of the spring device (2).

2. A spring device (2) according to claim 1, **characterized** in that the said connection member (8) comprises telescopically interconnected link parts (10, 12) which are hinged to the said fitting parts (6).

3. A spring device (2) according to claim 1, **characterized** in that the said connection member (8') comprises mutually nonrotatable and telescopically interconnected link parts (16, 18) which are hinged to the said fitting parts (6).

4. A spring device (2) according to claim 1, **characterized** in that the said connection member (8) comprises one or more thin leaf springs (20) which at opposite ends are hinged to the said fitting parts (6).

5. A spring device (2) according to claim 1, **characterized** in that the said connection member (8) comprises a number of transverse flat iron bars (22, 24, 26) which are welded to the said fitting parts (6) and which are interconnected by hinges.

## Patentansprüche

1. Federanordnung (2) für mittels Schraubenfedern gestüzte Spielplatzgeräte, die eine feste Schraubenfeder (4) enthält, die mit einem Ende im Boden oder an einer schweren Grundplatte verankert ist, die am entgegengesetzten Ende mit dem Spielplatzgerät verbunden ist und die eine Vorrichtung enthält, die so angeordnet ist, daß sie die Bewegungen der Schraubenfeder einschränkt, dadurch gekennzeichnet, daß die Vorrichtung zur Einschränkung der Bewegungen der Schraubenfeder (4) mindestens ein Verbindungsglied (8) enthält, dessen gegenüberliegende Enden in dem Hohlraum der Schraubenfeder (4) mit Anschlußstücken (6) verbunden sind -, mit denen entgegengesetzte Endbereiche der Schraubenfeder verbunden sind, wobei das Verbindungsglied (8) im rechten Winkel zu der Achse der Schraubenfeder (4) entlang einer im wesentlichen vertikalen, quer verlaufenden Fläche des Federanordnung (2) im wesentlichen unbiegbar ist.

2. Federanordnung (2) nach Anspruch 1, dadurch gekennzeichnet, daß das Verbindungsglied (8) teleskopartig verbundene Verbindungsbereiche (10, 12) enthält, die mit den Anschlußstücken (6) gelenkig verbunden sind.

3. Federanordnung (2) nach Anspruch 1, dadurch gekennzeichnet, daß das Verbindungsglied (8') wechselseitig nichtdrehbare und teleskopartig verbundene Verbindungsbereiche (16, 18) enthält, die mit den Anschlußstücken (6) gelenkig verbunden sind.

4. Federanordnung (2) nach Anspruch 1, dadurch gekennzeichnet, daß das Verbindungsglied (8) einen oder mehrere dünne Blattfedern (20) enthält, die an entgegengesetzten Enden mit den Anschlußstücken (6) gelenkig verbunden sind.

5. Federanordnung (2) nach Anspruch 1, dadurch gekennzeichnet, daß das Verbindungsglied (8) eine Anzahl von quer laufenden, flachen Eisenstäben (22, 24, 26) enthält, die mit den Anschlußstücken (6) verschweißt und durch Gelenke untereinander verbunden sind.

## Revendications

1. Dispositif à ressort (2) pour appareils d'aires de jeu supportés par des ressorts hélicoïdaux, comportant un ressort hélicoïdal solide (4) qui, à une extrémité, est ancré au sol ou à une base pesante et qui, à l'extrémité opposée, est relié à un appareil d'aire de jeu, et des moyens agencés de façon à limiter les mouvements du ressort hélicoïdal, caractérisé en ce que lesdits moyens destinés à limiter les mouvements du ressort hélicoïdal (4) comprennent au moins un élément de liaison (8) dont les extrémités opposées sont reliées, à l'intérieur creux du ressort hélicoïdal (4), à des pièces (6) d'adaptation auxquelles des parties extrêmes opposées du ressort hélicoïdal sont reliées, ledit élément (8) de liaison étant principalement résistant à la flexion perpendiculairement à l'axe du ressort hélicoïdal (4) suivant un plan transversal principalement vertical du dispositif à ressort (2).

2. Dispositif à ressort (2) selon la revendication 1, caractérisé en ce que ledit élément (8) de liaison comprend des parties à biellettes (10, 12) reliées entre elles télescopiquement, qui s'articulent sur lesdites parties d'adaptation (6).

3. Dispositif à ressort (2) selon la revendication 1, caractérisé en ce que ledit élément (8') de liaison comprend des parties à biellettes (16, 18) reliées entre elles télescopiquement et ne pouvant pas tourner l'une par rapport à l'autre, qui sont articulées sur lesdites parties (6) d'adaptation.

4. Dispositif à ressort (2) selon la revendication 1, caractérisé en ce que ledit élément (8) de liaison comprend un ou plusieurs ressorts à lames minces (20) qui sont articulés, à des extrémités opposées, auxdites pièces (6) d'adaptation.

5. Dispositif à ressort (2) selon la revendication 1, caractérisé en ce que ledit élément (8) de liaison comprend un certain nombre de barres transversales (22, 24, 26) en fer plat qui sont soudées auxdites parties (6) d'adaptation et qui sont reliées entre elles par des charnières.
